# EUROPÄISCHE PATENTSCHRIFT

(11) **EP 1 750 010 B1**
(45) Veröffentlichungstag und Bekanntmachung des Hinweises auf die Patenterteilung: **26.05.2010**
(21) Anmeldenummer: 06014314.6
(22) Anmeldetag: 11.07.2006
(51) Int. Cl.: F04B 1/14

(54) **Taumelscheibengetriebe, insbesondere für eine Axialkolbenpumpe**
Swash plate drive, in particular for an axial piston pump
Mécanisme à plateau oblique, notamment pour une pompe à pistons axiaux

(30) Priorität: 02.08.2005 DE 102005036228
(43) Veröffentlichungstag der Anmeldung: 07.02.2007
(73) Patentinhaber: Schaeffler KG, 91074 Herzogenaurach (DE)
(72) Erfinder: Oetjen, Jürgen, 91074 Herzogenaurach (DE)

(56) Entgegenhaltungen:
- WO-A-88/03228
- WO-A-2004/110668
- DE-A1- 19 738 813
- US-A- 2 398 486

## Beschreibung

### Gebiet der Erfindung

Die Erfindung betrifft ein insbesondere für Axialkolbenpumpen geeignetes Taumelscheibengetriebe mit einem Innenring und einem auf diesem in verkippter Anordnung gelagerten, als Taumelscheibe fungierenden Außenring.

### Hintergrund der Erfindung

Ein Taumelscheibengetriebe der eingangs genannten Art ist beispielsweise aus der DE 34 00 634 C1 bekannt. Um eine besonders rationelle Fertigung zu ermöglichen, ist in diesem Fall der Innenring als rohrförmiges Blechformteil mit spanlos eingeformter, umlaufender Kugellaufrille ausgebildet. An den beiden Endabschnitten des rohrförmigen Innenrings sind Haltebereiche zur Aufnahme einer Welle vorgesehen. Weiter weist der Innenring an einer Stirnseite Ausnehmungen oder Vorsprünge zur Bildung einer Kupplung mit der Welle auf. Insgesamt handelt es sich bei dem bekannten Taumelscheibengetriebe um eine bewährte Konstruktion.

Ein weiteres Taumelscheibengetriebe, zu dessen Herstellung ein spanloses Umformverfahren, insbesondere das Tiefziehverfahren, nutzbar ist, ist aus der DE 197 38 813 A1 bekannt. In diesem Fall bildet ein Taumelkörper die Laufbahnen zweier Kugellager: Ein Axialkugellager befindet sich auf einer ersten, anzutreibenden Kolben zugewandten Seite des Taumelkörpers. Auf der dem Axialkugellager gegenüberliegenden Seite des Taumelkörpers ist ein Schrägkugellager angeordnet, dessen Außenlaufring mit einem gehäusefesten Maschinenteil verbunden ist.

Aus der WO 88/03228 A ist eine Axialkolbenpumpe mit einem Taumelscheibengetriebe bekannt, dessen Taumelkörper mit Hilfe von Kegelrollen gelagert ist. Die Achse einer jeden zwischen dem Gehäuse der Axialkolbenpumpe und dem Taumelkörper angeordneten Kegelrolle schließt mit der Rotationsachse des Taumelscheibengetriebes einen Winkel von 30° bis 60° ein.

Ein aus der US 2,398,486 A bekanntes Taumelscheibengetriebe weist eine relativ zu einer Antriebswelle schräg gestellte Taumelscheibe auf, die von einem Gehäuse umschlossen ist. Zwischen dem Gehäuse und der Taumelscheibe sind Kugeln als Wälzkörper angeordnet.

### Aufgabe der Erfindung

Der Erfindung liegt die Aufgabe zugrunde, ein Taumelscheibengetriebe mit einem Innenring und einem relativ zu diesem drehbaren, gegenüber der Längsachse verkippten Außenring weiter zu verbessern, insbesondere hinsichtlich der mechanischen Belastbarkeit, wobei zugleich rationelle Fertigungsmöglichkeiten gegeben sind.

### Zusammenfassung der Erfindung

Diese Aufgabe wird erfindungsgemäß gelöst durch ein Taumelscheibengetriebe mit den Merkmalen des Anspruchs 1. Dieses Taumelscheibengetriebe weist einen Innenring und zwei Außenringe auf. Auf dem Innenring befindet sich eine relativ zur Längsachse, d.h. zur Rotationsachse des Innenrings, geneigt verlaufende Wälzkörperlaufbahn in Form einer Kugellaufrille. Die auf dieser Wälzkörperlaufbahn angeordneten Wälzkörper, nämlich Kugeln, sind vom ersten Außenring, welcher als Taumelscheibe fungiert, umgeben. Zusätzlich zur Wälzkörperlaufbahn, welche ein Teil der Lagerung der Taumelscheibe bildet, weist der Innenring eine zweite Lauffläche für Wälzkörper auf, wobei diese Lauffläche symmetrisch zur Längsachse des Taumelscheibengetriebes angeordnet ist. Diese zweite Lauffläche beschreibt einen ringförmigen Abschnitt eines zur Längsachse konzentrischen Kegelmantels und dient der Lagerung von Zylinder- oder Kegelrollen. Diese relativ zur Längsachse schräg angeordneten Rollen kontaktieren zugleich eine Lauffläche auf der der Längsachse zugewandte Innenseite des zweiten Außenrings.

Der zweite Außenring ist nicht drehbar - typischerweise in einem Gehäuse - installiert und sorgt für eine stabile Lagerung des Innenrings, welcher mit einer in der Regel motorisch angetriebenen Welle verbunden oder identisch ist. Durch die auf dem zweiten Außenring abrollenden Zylinder- oder Kegelrollen sind sowohl radiale als auch axiale Kräfte zwischen dem Innenring und dem zweiten Außenring übertragbar. Bei den allgemein als Zylinder- oder Kegelrollen bezeichneten Rollen kann es sich je nach den Abmessungen des Taumelscheibengetriebes beispielsweise um Nadelrollen handeln, wobei auch eine mehrreihige Ausführung denkbar ist. Rollen mit konstantem Durchmesser, also Zylinder- oder Nadelrollen, haben gegenüber Kegelrollen fertigungstechnische Vorteile, während eine konische Rollenform im Fall einer Axial-Radial-Lagerung, wie hier gegeben, eine beliebige Annäherung an die geometrisch ideale Wälzkörperform ermöglicht. Die Verwendung von Kegelrollen kommt daher hauptsächlich bei größeren Lagerdurchmessern in Betracht.

In bevorzugter Ausgestaltung ist der zweite Außenring, auf welchem die Zylinder- oder Kegelrollen abrollen, als spanlos geformtes Blechteil gefertigt. Durch die sich aus der Schrägstellung der Rollen ergebende Konusform des zweiten Außenrings ist auch bei geringen Materialstärken eine hohe Stabilität erzielbar.

Der erste, kugelgelagerte Außenring ist im Gegensatz zum zweiten Außenring bevorzugt mehrteilig aufgebaut. Hierbei sind zwei Halbschalen, welche in rationeller Weise spanlos herstellbar sind, durch Schweiß- oder Nietverbindungen dauerhaft verbunden. Jede auf dem Innenring umlaufende Kugel kontaktiert jede der beiden Halbschalen an genau einem Punkt. Zugleich ist auch die Kugellaufrille auf dem Innenring derart geformt, dass jede Kugel an zwei Punkten anliegt. Insgesamt ist damit eine Vierpunktlagerung gegeben. Die Kugeln sind vorzugsweise ohne Käfig zwischen dem Innenring und dem ersten Außenring gelagert, so dass sich eine besonders für die Übertragung hoher Kräfte geeignete vollkugelige Vierpunktlagerung ergibt.

Der Innenring ist sowohl durch spanende als auch durch spanlose Verfahren herstellbar. Um die auf der Kugellaufrille umlaufenden Kugeln kraftübertragend zu führen, wobei insbesondere erhebliche Kippmomente aufzunehmen sind, weist der Innenring im Vergleich zum zweiten Außenring eine große Wandstärke auf. Vorzugsweise beträgt die Wandstärke des Innenrings mindestens das Doppelte, beispielsweise mehr als das 3-fache, der Wandstärke des zweiten Außenrings. Die Kugeln sind auf dem Innenring vorzugsweise mit einem Druckwinkel zwischen 30° und 45°, beispielsweise 35°, gelagert. Die Flächennormale einer durch die Mittelpunkte der Kugeln gelegten Ebene ist gegenüber der Längsachse des Innenrings bevorzugt um einen Winkel von 5° bis 15°, insbesondere von 6° bis 10°, verkippt.

Die zwischen dem Innenring und dem zweiten Außenring angeordneten Zylinder- oder Kegelrollen sind in bevorzugter Ausgestaltung in einem Käfig geführt. Die Achsen dieser Zylinder- oder Kegelrollen sind gegenüber der Längsachse des Taumelscheibengetriebes vorzugsweise um 30° bis 60°, insbesondere um 45°, schräg gestellt. Sofern die Rollen zylindrisch sind, weisen die Laufflächen des Innenrings sowie des zweiten Außenrings eine identische Schrägstellung auf. Der in Richtung der Längsachse des Taumelscheibengetriebes gemessene Abstand zwischen den auf einer geneigten Bahn umlaufenden, der Lagerung der Taumelscheibe dienenden Wälzkörpern, insbesondere Kugeln, und den an der inneren Oberfläche des zweiten Außenrings abrollenden Zylinder- oder Kegelrollen wird unter Berücksichtigung des Platzbedarfs der Außenringe sowie ggf. der die Wälzkörper führenden Käfige möglichst gering gewählt. Vorzugsweise ist der kleinste axiale Abstand zwischen den Wälzkörpern der verschiedenen Lager geringer als der Teilkreisradius jeder der Wälzkörper. Beispielsweise beträgt der minimale Axialabstand zwischen den Wälzkörpern der unterschiedlichen Lager weniger als 30%, insbesondere weniger als 20%, des Teilkreisradius der Lager beziehungsweise des kleineren der unterschiedlichen Teilkreisradien. Der Teilkreisradius ist der Radius desjenigen Kreises, auf dem die Mittelpunkte der Wälzkörper, also der Kugeln oder der Rollen, liegen.

Im Vergleich mit den Abmessungen der Wälzkörper gelten vorzugsweise folgende Dimensionierungen: Der minimale Axialabstand zwischen den Wälzkörpern der unterschiedlichen Lager ist geringer als der Durchmesser, insbesondere geringer als der Radius, der Wälzkörper des ersten Lagers, das heißt des Taumelscheibenlagers. Weiter ist dieser minimale Axialabstand geringer als die Länge der Rollen des zweiten Lagers, das heißt des Lagers zwischen dem Inenring und dem zweiten Außenring. Der maximale Axialabstand zwischen den gleich- oder verschiedenartigen Wälzkörpern der unterschiedlichen Lager ist geringer als der 1,5-fache Durchmesser, insbesondere geringer als der einfache Durchmesser, der Wälzkörper des ersten Lagers und geringer als die doppelte Länge der Wälzkörper des zweiten Lagers. Sind die Wälzkörper des ersten Lagers als Kugeln ausgebildet, so übersteigt in einer sowohl hinsichtlich des benötigten Bauraums als auch hinsichtlich der Kraftübertragungsverhältnisse besonders vorteilhaften Ausführungsform des Taumelscheibengetriebes der Teilkreisdurchmesser der Kugeln den Teilkreisdurchmesser der Rollen um mindestens 5% und höchstens 30%, insbesondere um 10% bis 20%.

Der Innenring des Taumelscheibengetriebes hat im Wesentlichen eine Hülsen- oder Rohrform. Sofern Kugeln als Wälzkörper vorgesehen sind, rollen diese auf der Außenwandung der Hülse ab. Dagegen sind schräg zur Achse des Getriebes gestellte Zylinder- oder Kegelrollen auf einer stirnseitigen Fase des Innenrings angeordnet. Die Wälzkörper der Lager sind vorzugsweise in sich überlappenden Radialbereichen um die Längsachse des Taumelscheibengetriebes angeordnet. Die besonders geringen axialen und radialen Abstände zwischen den Wälzkörpern der beiden Lager begünstigen die Übertragung hoher Kräfte und Momente in dem Taumelscheibengetriebe.

Nachfolgend werden zwei Ausführungsbeispiele der Erfindung anhand einer Zeichnung näher erläutert. Hierin zeigen:

### Kurze Beschreibung der Zeichnung

- Figur 1: in perspektivischer Darstellung ein erstes Ausführungsbeispiel eines Taumelscheibengetriebes,
- Figur 2: eine Draufsicht auf das Taumelscheibengetriebe nach Figur 1,
- Figur 3: eine Schnittdarstellung des Taumelscheibengetriebes nach Figur 1, und
- Figur 4: ein Detail aus Figur 3.

### Ausführliche Beschreibung der Zeichnung

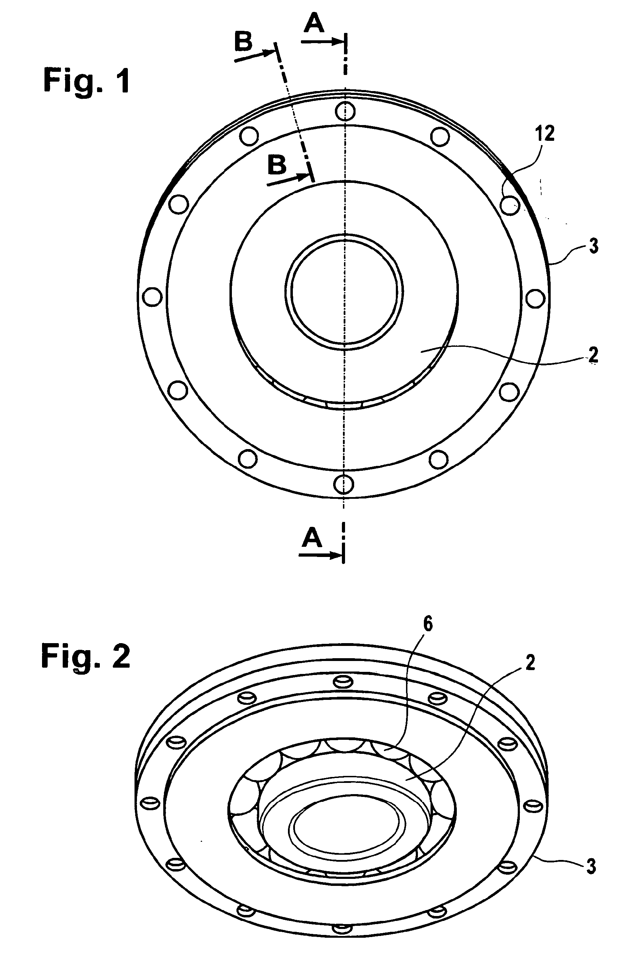

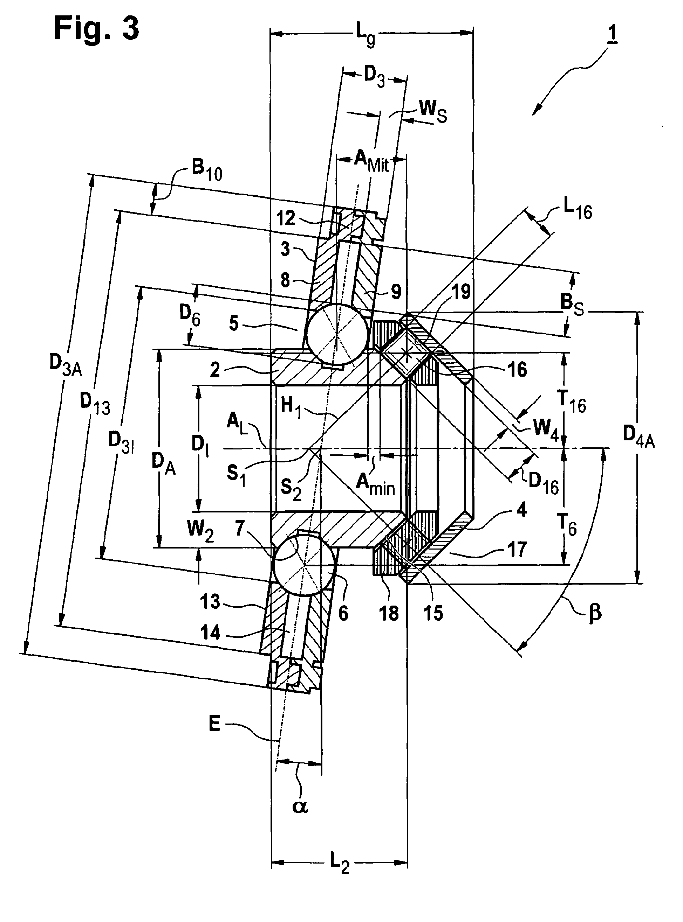

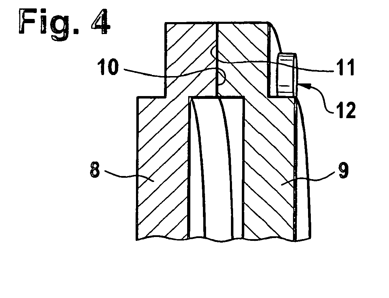

Ein in den Figuren 1 bis 4 dargestelltes Taumelscheibengetriebe 1 setzt sich im Wesentlichen zusammen aus einem Innenring 2, einem als Taumelscheibe fungierenden ersten Außenring 3 und einem zweiten Außenring 4. Das Taumelscheibengetriebe 1 ist Teil einer nicht weiter dargestellten Axialkolbenpumpe eines Hochdruckreinigungsgerätes. In der Anordnung nach Figur 3, die einen Schnitt A-A aus Figur 1 zeigt, befinden sich mehrere mittels des Taumelscheibengetriebes 1 betätigte Axialkolben auf der linken Seite der Taumelscheibe 3 und der den Innenring 2 antreibende Elektromotor auf der rechten Seite des zweiten Außenrings 4. Die Figur 4 zeigt in einem Ausschnitt eines Schnittes B-B aus Figur 1 den äußeren Bereich des ersten Außenrings 3.

Zur Lagerung des ersten Außenrings 3 auf dem Innenring 2 ist ein erstes Wälzlager 5 mit Kugeln 6 als Wälzkörper vorgesehen. Die Kugeln 6 sind auf einer allgemein als Wälzkörperlaufbahn bezeichneten Kugellaufrille 7 auf der Außenseite des Innenrings 2 angeordnet. Zur Erzeugung der Taumelbewegung des ersten Außenrings 3 ist die Kugellaufrille 7 gegenüber der Längsachse A_{L} des Taumelscheibengetriebes 1 um einen Kippwinkel α von 8° verkippt. Der die Kugeln 6 umgebende erste Außenring 3 ist aus zwei Halbschalen 8, 9 zusammengesetzt, wobei die Gesamtdicke D₃ des Außenrings 3 den Kugeldurchmesser D₆ der Kugeln 6 um max. 20% übersteigt. Jede Kugel 6 kontaktiert die Halbschalen 8, 9 an jeweils genau einem Punkt. Ebenso kontaktiert jede Kugel 6 die Kugellaufrille 7 in definierter Weise an zwei Punkten. Insgesamt ist das Wälzlager 5 somit als vollkugeliges Vierpunktlager ausgebildet, wobei der Druckwinkel 35° beträgt. Das Wälzlager 5 ist damit zur Aufnahme von axialen und radialen Belastungen sowie von Kippmomenten geeignet.

Sobald die Halbschalen 8, 9 miteinander verbunden sind, ist der erste Außenring 3 nicht mehr vom Innenring 2 abnehmbar. Die beiden Halbschalen 8, 9 stoßen ausschließlich im radial äußeren Bereich an Stirnflächen 10, 11 aneinander, wie im Detail in Figur 4 erkennbar. Zur nichtlösbaren Verbindung der Halbschalen 8, 9 sind im dargestellten Ausführungsbeispiel Nietverbindungen 12 vorgesehen. Alternativ sind beispielsweise auch Schweißverbindungen, insbesondere in Form von Punkt-Schweißungen, möglich. Eine Anlagefläche 13 für die nicht dargestellten Axialkolben befindet sich auf der Oberfläche der Halbschale 8 im Bereich radial innerhalb der Nietverbindungen 12. In diesem Bereich, dessen Durchmesser mit D₁₃ bezeichnet ist, sind die Halbschalen, 8, 9 etwas voneinander beabstandet, so dass ein Spalt 14 innerhalb der ersten Außenrings 3 gebildet ist. Dieser Spalt 14 sorgt in gewünschter Weise für eine zumindest geringfügige Elastizität des Außenrings 3 in diesem Radialbereich. Dies wirkt sich positiv auf die mechanischen Belastungen aus, denen das Wälzlager 5 beim Betrieb des Taumelscheibengetriebes 1 ausgesetzt ist. Die in Radialrichtung des Außenrings 3 gemessene Breite B_{S} des Spalts 14 ist größer als die in derselben Richtung gemessene Breite B₁₀ der ringförmigen Stirnflächen 10, 11. Im Ausführungsbeispiel entspricht die Breite B_{S} etwa dem doppelten der Breite B₁₀ sowie der einfachen Dicke D₃ des Außenrings 3. Die letztgenannte Gesamtdicke D₃ des Außenrings 3 wird auch an den Nietverbindungen 12 nicht überschritten. Der Innendurchmesser des ersten Außenrings 3 ist mit D_{3I}, der Außendurchmesser mit D_{3A} bezeichnet. Das Verhältnis D_{3A}/D_{3I} zwischen Außen- und Innendurchmesser ist kleiner als zwei. Jede der Halbschalen 8, 9 ist als spanlos geformtes Blechteil gefertigt und weist eine Wandstärke W₈ auf, die einem Drittel der Dicke D₃ des Außenrings 3 entspricht.

Der im Wesentlichen hülsenförmige Innenring 2, auf welchem mittels des Wälzlagers 5 der erste Außenring 3 gelagert ist, weist eine Wandstärke W₂ auf, die zwischen dem 1,5-fachen und dem doppelten der Wandstärke W₈ jeder Halbschale 8, 9 liegt. In nicht dargestellter Weise ist der Innenring 2 mit einer elektromotorisch angetriebenen Welle verbunden. Auf der dem Elektromotor zugewandten, d.h. den Axialkolben abgewandten Seite des Innenrings 2 weist dieser stirnseitig eine Fase 15 auf. An dieser insgesamt eine konische Form aufweisenden Fase 15 liegen zylindrische Rollen 16 an, allgemein als Zylinder- oder Kegelrollen 16 bezeichnet, die zwischen den Innenring 2 und dem zweiten Außenring 4 abrollen und damit Teile eines zweiten Wälzlagers 17 bilden. Der Außendurchmesser des zweiten Außenrings 4 ist mit D_{4A} bezeichnet und beträgt geringfügig weniger als der Innendurchmesser D_{3I} des ersten Außenrings 3. Im Gegensatz zum ersten Wälzlager 5 ist das zweite Wälzlager 17 symmetrisch zur Längsachse A_{L} angeordnet. Die in Axialrichtung gemessene Gesamtlänge L_{g} des Taumelscheibengetriebes 1 ist ohne Berücksichtigung des ersten Außenrings 3, das heißt der Taumelscheibe, einerseits durch den Innenring 2 und andererseits durch den zweiten Außenring 4 begrenzt und beträgt weniger als die Hälfte des Außendurchmessers D_{3A} des ersten Außenrings 3. Die Zylinderrollen 16 sind gegenüber der Längsachse A_{L} um einen Schrägstellungswinkel β von 45° schräg gestellt, so dass das zweite Wälzlager 17 für axiale und für radiale Belastungen ausgelegt ist.

Im Unterschied zu den im Ausführungsbeispiel nach den Figuren 1 bis 4 insgesamt zwölf Kugeln 6 des ersten Wälzlagers 5 sind die insgesamt elf Zylinderrollen 16 des zweiten Wälzlagers 17 in einem Käfig 18, vorzugsweise aus Kunststoff, geführt. Die in Axialrichtung der einzelnen Zylinderrollen 16 gemessene Länge L₁₆ der Zylinderrollen 16 weicht von der Wandstärke W₂ des Innenrings 2 um nicht mehr als 30%, im Ausführungsbeispiel um nicht mehr als 15%, ab. Der Durchmesser D₁₆ der Zylinderrollen 16 weicht von deren Länge L₁₆ um nicht mehr als 20% ab, so dass sich, wie in Figur 3 erkennbar, eine zumindest annähernd quadratische Auslegung der Zylinderrollen 16 ergibt. Sowohl der Durchmesser D₁₆ als auch die Länge L₁₆ der Zylinderrollen 16 ist geringer, im Äusführungsbeispiel um mehr als 30%, als der Durchmesser D₆ der Kugeln 6. Die Zylinderrollen 16 sind damit ausreichend klein, um vollständig an der als Lauffläche des Innenrings 2 dienenden Fase 15 anliegen zu können, ohne hierfür eine über die Wandstärke W₂ hinausgehende Verbreiterung des Innenrings 2 zu erfordern. Die Mittelpunkte der Zylinderrollen 16 befinden sich radial etwas innerhalb der Außenwandung des Innenrings 2. Dieser ist rationell als Drehteil herstellbar und weist eine annähernd zylindrische Form auf, wobei die in Axialrichtung, das heißt in Richtung der Längsachse A_{L}, gemessene Länge L₂ des Innenrings 2 mindestens dem Innendurchmesser D_{I} des Innenrings 2 entspricht und geringer als dessen Außendurchmesser D_{A} ist.

Unter Berücksichtigung des Raumbedarfs des Käfigs 18 sowie des ersten Außenrings 3 sind die Zylinderrollen 16 mit geringstmöglichem Abstand zu den Kugeln 6 angeordnet. Der in Richtung der Längsachse A_{L} gemessene minimale Axialabstand zwischen einer Zylinderrolle 16 und einer Kugel 6 ist mit Aₘᵢₙ bezeichnet und beträgt weniger als 20% des Außenradius R_{A} des Innenrings 2 sowie weniger als 25% des Innenradius R_{I} des Innenrings 2. In Fig. 3 sind statt der Radien R_{A}, R_{I} des Innenrings 2 lediglich die zugehörigen Durchmesser D_{A}, D_{I} eingezeichnet. Die Teilkreisradien der Kugeln 6 sowie der Zylinderrollen 16 sind mit T₆ beziehungsweise T₁₆ bezeichnet. Wie aus Figur 3 hervorgeht, ist der minimale Axialabstand Aₘᵢₙ der Wälzkörper 6, 16 wesentlich geringer als jeder der Teilkreisradien T₆, T₁₆. Der minimale axiale Abstand zwischen den Mittelpunkten der unterschiedlichen Wälzkörper 6, 16 ist als minimaler Mittelpunktsabstand A_{Mit} bezeichnet und ebenfalls geringer, im Ausführungsbeispiel um mehr als 20 %, als der Teilkreisradius T₁₆ der Zylinderrollen 16, wobei dieser der kleinere der Teilkreisradien T₆, T₁₆ der verschiedenen Wälzkörper 6, 16 ist. Der Durchmesser D₆ der Kugeln 6 wird vom minimalen Mittelpunktsabstand A_{Mit} um nicht mehr als 50% überschritten.

Der geringe axiale Abstand zwischen den Wälzlagern 5, 17 ist auch an dem im Folgenden erläuterten geometrischen Merkmal erkennbar: Zunächst wird eine erste Hilfslinie H₁ betrachtet, die in der Schnittdarstellung nach Figur 3 senkrecht zur Rotationsachse der Zylinderrolle 16 sowie normal zur Lauffläche 19 des zweiten Außenrings 4, auf welcher die Zylinderrolle 16 abrollt, verläuft. Die Gesamtheit der Hilfslinien H₁ beschreibt einen Kegel, der sämtliche Zylinderrollen 16 mittig schneidet und eine Kegelspitze S₁ aufweist, durch die die Längsachse A_{L} verläuft. Weiter wird eine Hilfsebene E definiert, die durch die Mittelpunkte der Kugeln 6 des ersten Wälzlagers 5 verläuft. Der Schnittpunkt dieser Hilfsebene E mit der Längsachse A_{L} ist mit S₂ bezeichnet. Dieser Schnittpunkt S₂ ist vom zweiten Außenring 4 in axialer Richtung geringer beabstandet als die durch die Lage der Zylinderrollen 16 bestimmte Kegelspitze S₁.

Der auch die Funktion einer Tellerfeder wahrnehmende zweite Außenring 4 ist wie die Halbschalen 8, 9 des ersten Außenrings 3 als spanlos gefertigtes Blechteil ausgebildet. Die Wandstärke W₄ des Außenrings 4 beträgt weniger, im Ausführungsbeispiel genau um die Hälfte, als die Wandstärke W₈, die jede der Halbschalen 8, 9 aufweist. Durch die Konusform des Außenrings 4 ist dennoch eine ausreichende Stabilität, insbesondere eine hohe Belastbarkeit des zweiten Wälzlagers 17 in axialer Richtung, gegeben. Der nicht rotierbare zweite Außenring 4 stützt sich in nicht dargestellter Weise an einer Anschlusskonstruktion ab, die mit einem Motorgehäuse des elektrischen Antriebs des Taumelscheibengetriebes 1 identisch sein kann.

### Bezugszeichenliste

- 1: Taumelscheibengetriebe
- 2: Innenring
- 3: erster Außenring
- 4: zweiter Außenring
- 5: erstes Wälzlager
- 6: Wälzkörper
- 7: Wälzkörperlaufbahn
- 8: Halbschale
- 9: Halbschale
- 10: Stirnfläche
- 11: Stirnfläche
- 12: Nietverbindung
- 13: Anlagefläche
- 14: Spalt
- 15: Fase
- 16: Zylinder- oder Kegelrolle
- 17: zweites Wälzlager
- 18: Käfig
- 19: Lauffläche
- 20: Bord

- α: Kippwinkel
- β: Schrägstellungswinkel
- A_{L}: Längsachse
- Aₘᵢₙ: min. Axialabstand
- A_{Mit}: min. Mittelpunktsabstand
- B₁₀: Breite der Stirnfläche
- B_{S}: Breite des Spaltes
- D₃: Gesamtdicke
- D₆: Kugeldurchmesser
- D₁₃: Durchmesser der Anlagefläche
- D₁₆: Durchmesser einer Zylinderrolle
- D_{I}: Innendurchmesser des Innenrings
- D_{A}: Außendurchmesser des Innenrings
- D₃₁: Innendurchmesser des ersten Außenrings
- D_{3A}: Außendurchmesser des ersten Außenrings
- D_{4A}: Außendurchmesser des zweiten Außenrings
- E: Hilfsebene
- H₁: Hilfslinie
- L₂: Länge des Innenrings
- L₁₆: Länge einer Zylinderrolle
- L_{g}: Gesamtlänge
- R_{A}: Außenradius
- R_{I}: Innenradius
- S₁: Kegelspitze
- S₂: Schnittpunkt
- T₆: Teilkreisradius der Kugeln
- T₁₆: Teilkreisradius der Zylinderrollen
- W₂: Wandstärke des Innenrings
- W₄: Wandstärke des zweiten Außenrings
- W₈: Wandstärke einer Halbschale

## Patentansprüche

1. Taumelscheibengetriebe (1), insbesondere für eine Axialkolbenpumpe, mit einem Innenring (2), der an seiner Mantelfläche eine zu seiner Längsachse (A_{L}) geneigt verlaufende, als Kugellaufrille ausgebildete Wälzkörperlaufbahn (7) aufweist, und mit einem ersten Außenring (3), der die auf der Wälzkörperlaufbahn (7) geführten Wälzkörper (6), nämlich Kugeln, umgibt, **gekennzeichnet durch** einen zweiten Außenring (4), der symmetrisch zur Längsachse (A_{L}) angeordnet ist, wobei zwischen einer relativ zur Längsachse (A_{L}) konzentrischen, konischen Lauffläche des Innenrings (2) und einer Lauffläche (19) des zweiten Außenrings (4) Zylinder- oder Kegelrollen (16) angeordnet sind.

2. Taumelscheibengetriebe (1) nach Anspruch 1, **dadurch gekennzeichnet, dass** der zweite Außenring (4) als spanlos gefertigtes Blechteil ausgebildet ist.

3. Taumelscheibengetriebe (1) nach Anspruch 1 oder 2, **dadurch gekennzeichnet, dass** die Lagerung der Wälzkörper (6) zwischen dem Innenring (2) und dem ersten Außenring (3) ein Vierpunktlager bildet.

4. Taumelscheibengetriebe (1) nach einem der Ansprüche 1 bis 3, **dadurch gekennzeichnet, dass** der erste Außenring (3) aus zwei spanlos gefertigten Halbschalen (8,9) zusammengesetzt ist.

5. Taumelscheibengetriebe (1) nach einem der Ansprüche 1 bis 4, **dadurch gekennzeichnet, dass** die Wälzkörperlaufbahn (7) gegenüber der Längsachse (A_{L}) um mindestens 5° verkippt ist.

6. Taumelscheibengetriebe (1) nach einem der Ansprüche 1 bis 5, **dadurch gekennzeichnet, dass** die Wälzkörperlaufbahn (7) gegenüber der Längsachse (A_{L}) um höchstens 15° verkippt ist.

7. Taumelscheibengetriebe (1) nach einem der Ansprüche 1 bis 6, **dadurch gekennzeichnet, dass** die Lauffläche (19) des zweiten Außenrings (4) gegenüber der Längsachse (A_{L}) um mindestens 30° schräg gestellt ist.

8. Taumelscheibengetriebe (1) nach einem der Ansprüche 1 bis 7, **dadurch gekennzeichnet, dass** die Lauffläche (19) des zweiten Außenrings (4) gegenüber der Längsachse (A_{L}) um höchstens 60° schräg gestellt ist.

9. Taumelscheibengetriebe (1) nach einem der Ansprüche 1 bis 8, **dadurch gekennzeichnet, dass** der kleinste axiale Abstand (Aₘᵢₙ) zwischen den Kugeln (6) und den Zylinder- oder Kegelrollen (16) geringer ist als der Teilkreisradius (T₆) der Kugeln (6) sowie der Teilkreisradius (T₁₆) der Zylinder- oder Kegelrollen (16).

10. Taumelscheibengetriebe (1) nach einem der Ansprüche 1 bis 9, **dadurch gekennzeichnet, dass** die Wandstärke (W₄) des zweiten Außenrings (4) weniger als die Hälfte der Wandstärke (W₂) des Innenrings (2) beträgt.

## Claims

1. Swashplate mechanism (1), in particular for an axial piston pump, with an inner ring (2) which has on its surface area a rolling-body raceway (7) running at an inclination with respect to the longitudinal axis (A_{L}) of the said inner ring and designed as a ball race groove, and with a first outer ring (3) which surrounds the rolling bodies (6), to be precise balls, which are guided on the rolling-body raceway (7), **characterized by** a second outer ring (4) which is arranged symmetrically with respect to the longitudinal axis (A_{L}), cylindrical or tapered rollers (16) being arranged between a conical running surface, concentric in relation to the longitudinal axis (A_{L}), of the inner ring (2) and a running surface (19) of the second outer ring (4).

2. Swashplate mechanism (1) according to Claim 1, **characterized in that** the second outer ring (4) is formed as a sheet-metal part manufactured in a non-cutting manner.

3. Swashplate mechanism (1) according to Claim 1 or 2, **characterized in that** the mounting of the rolling bodies (6) between the inner ring (2) and the first outer ring (3) forms a four-point bearing.

4. Swashplate mechanism (1) according to one of Claims 1 to 3, **characterized in that** the first outer ring (3) is composed of two half-shells (8, 9) manufactured in a non-cutting manner.

5. Swashplate mechanism (1) according to one of Claims 1 to 4, **characterized in that** the rolling-body raceway (7) is tilted at at least 5° with respect to the longitudinal axis (A_{L}).

6. Swashplate mechanism (1) according to one of Claims 1 to 5, **characterized in that** the rolling-body raceway (7) is tilted at at most 15° with respect to the longitudinal axis (A_{L}).

7. Swashplate mechanism (1) according to one of Claims 1 to 6, **characterized in that** the running surface (19) of the second outer ring (4) is inclined at at least 30° with respect to the longitudinal axis (A_{L}).

8. Swashplate mechanism (1) according to one of Claims 1 to 7, **characterized in that** the running surface (19) of the second outer ring (4) is inclined at at most 60° with respect to the longitudinal axis (A_{L}) .

9. Swashplate mechanism (1) according to one of Claims 1 to 8, **characterized in that** the smallest axial distance (Aₘᵢₙ) between the balls (6) and the cylindrical or tapered rollers (16) is lower than the reference circle radius (T₆) of the balls (6) and the reference circle radius (T₁₆) of the cylindrical or tapered rollers (16).

10. Swashplate mechanism (1) according to one of Claims 1 to 9, **characterized in that** the wall thickness (W₄) of the second outer ring (4) amounts to less than half the wall thickness (W₂) of the inner ring (2).

## Revendications

1. Transmission à plateau oscillant (1), en particulier pour une pompe à piston axial, comprenant une bague interne (2) qui présente sur sa surface d'enveloppe, une piste de roulement (7) pour corps de roulement réalisée sous forme de gorge de roulement à billes s'étendant de manière inclinée par rapport à son axe longitudinal (A_{L}), et une première bague externe (3) qui entoure les corps de roulement (6) guidés sur la piste de roulement (7) pour corps de roulement, à savoir des billes, **caractérisée par** une deuxième bague externe (4), qui est disposée symétriquement par rapport à l'axe longitudinal (A_{L}), des rouleaux cylindriques ou coniques (16) étant disposés entre une surface de roulement conique de la bague interne (2), concentrique à l'axe longitudinal (A_{L}), et une surface de roulement (19) de la deuxième bague externe (4).

2. Transmission à plateau oscillant (1) selon la revendication 1, **caractérisée en ce que** la deuxième bague externe (4) est réalisée sous forme de pièce en tôle fabriquée sans enlèvement de copeaux.

3. Transmission à plateau oscillant (1) selon la revendication 1 ou 2, **caractérisée en ce que** le support sur palier des corps de roulement (6) entre la bague interne (2) et la première bague externe (3) forme un palier à quatre points.

4. Transmission à plateau oscillant (1) selon l'une quelconque des revendications 1 à 3, **caractérisée en ce que** la première bague externe (3) est constituée de deux demi-coques (8, 9) fabriquées sans enlèvement de copeaux.

5. Transmission à plateau oscillant (1) selon l'une quelconque des revendications 1 à 4, **caractérisée en ce que** la piste de roulement (7) pour corps de roulement est basculée d'au moins 5° par rapport à l'axe longitudinal (A_{L}).

6. Transmission à plateau oscillant (1) selon l'une quelconque des revendications 1 à 5, **caractérisée en ce que** la piste de roulement (7) pour corps de roulement est basculée d'au plus 15° par rapport à l'axe longitudinal (A_{L}).

7. Transmission à plateau oscillant (1) selon l'une quelconque des revendications 1 à 6, **caractérisée en ce que** la surface de roulement (19) de la deuxième bague externe (4) est disposée en biais d'au moins 30° par rapport à l'axe longitudinal (A_{L}).

8. Transmission à plateau oscillant (1) selon l'une quelconque des revendications 1 à 7, **caractérisée en ce que** la surface de roulement (19) de la deuxième bague externe (4) est disposée en biais d'au plus 60° par rapport à l'axe longitudinal (A_{L}).

9. Transmission à plateau oscillant (1) selon l'une quelconque des revendications 1 à 8, **caractérisée en ce que** la distance axiale la plus petite (Aₘᵢₙ) entre les billes (6) et les rouleaux cylindriques ou coniques (16) est plus petite que le rayon du cercle partiel (T₆) des billes (6) ainsi que le rayon du cercle partiel (T₁₆) des rouleaux cylindriques ou coniques (16).

10. Transmission à plateau oscillant (1) selon l'une quelconque des revendications 1 à 9, **caractérisée en ce que** l'épaisseur de paroi (W₄) de la deuxième bague externe (4) est inférieure à la moitié de l'épaisseur de paroi (W₂) de la bague interne (2).
